(19) Europäisches Patentamt
European Patent Office
Office européen des brevets

(11) **EP 2 794 301 B1**

(12) **FASCICULE DE BREVET EUROPEEN**

(45) Date de publication et mention
de la délivrance du brevet:
**16.10.2019 Bulletin 2019/42**

(21) Numéro de dépôt: **12812601.8**

(22) Date de dépôt: **19.12.2012**

(51) Int Cl.:
*B60C 11/11* *(2006.01)*       *B60C 11/12* *(2006.01)*
*B60C 1/00* *(2006.01)*        *B60C 11/14* *(2006.01)*
*B60C 11/00* *(2006.01)*       *B60C 11/03* *(2006.01)*
*B60C 11/13* *(2006.01)*

(86) Numéro de dépôt international:
**PCT/EP2012/076115**

(87) Numéro de publication internationale:
**WO 2013/092688 (27.06.2013 Gazette 2013/26)**

(54) **BANDE DE ROULEMENT COMPORTANT DES BLOCS OBLIQUES**

SCHRÄGE BLÖCKE UMFASSENDER LAUFSTREIFEN

TREAD BAND COMPRISING OBLIQUE BLOCKS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.12.2011 FR 1162261**

(43) Date de publication de la demande:
**29.10.2014 Bulletin 2014/44**

(73) Titulaire: **Compagnie Générale des
Etablissements Michelin
63000 Clermont-Ferrand (FR)**

(72) Inventeur: **KANEKO, Shuichi
Tokyo 102-8176 (JP)**

(74) Mandataire: **Regimbeau
20, rue de Chazelles
75847 Paris Cedex 17 (FR)**

(56) Documents cités:
**WO-A1-01/43958        DE-A1- 2 606 703
JP-A- 2 246 808        JP-A- 60 094 805
JP-A- 2004 314 783     JP-A- 2007 216 829**

## Description

### DOMAINE DE L'INVENTION

La présente invention concerne une bande de roulement pour pneumatique pour roulages hivernaux et plus particulièrement une bande de roulement pour pneumatique comportant des blocs orientés principalement selon une direction oblique.

### ETAT DE LA TECHNIQUE

Pour améliorer l'adhérence sur un sol enneigé d'un pneumatique pour roulages hivernaux, dit pneumatique neige, il est connu d'utiliser dans la bande de roulement un matériau caoutchouteux présentant un faible module élastique. La rigidité globale des blocs constituant cette bande de roulement est alors diminuée et leur résistance à l'usure peut également diminuer.

Afin d'améliorer la rigidité des blocs tout en conservant une bonne résistance à l'usure, il est connu de former une bande de roulement avec des blocs inclinés faisant un angle supérieur à 0° avec une direction axiale. De cette manière, chaque bloc offre une poutre apparente plus importante vis-à-vis des sollicitations exercées sur ce bloc.

Toujours pour améliorer la rigidité des blocs, il est connu des documents WO01/43958, JP2246808, DE2606703, JP2007216829 et JP60094805 de pourvoir les faces latérales des blocs avec une couche d'un matériau de recouvrement présentant un module élastique supérieur au module élastique du matériau caoutchouteux. Cependant l'utilisation d'un tel matériau de recouvrement peut entraîner une augmentation du bruit généré par le pneumatique au cours de son roulage. Le document JP2004-314783A décrit une bande de roulement comportant une pluralité de rainures, et dans laquelle au moins un fond de rainure est recouvert en surface par une couche protectrice coupée réalisée en caoutchouc et comprenant des fibres courtes.

Il existe donc un besoin pour optimiser le compromis entre l'adhérence sur un sol enneigé d'un pneumatique neige et le bruit généré par ce pneumatique au cours de son roulage.

### DEFINITIONS

Par « pneumatique », on entend tous les types de bandages élastiques soumis à une pression interne ou non.

Par « pneumatique neige » (« snow tyre » ou « winter tyre » en anglais), on entend un pneumatique repéré par une inscription M+S ou M.S. ou encore M&S, marquée sur au moins un des flancs du pneumatique. Ce pneumatique neige se caractérise par un dessin de la bande de roulement et une composition caoutchoutique destinés avant tout à assurer, dans la boue et la neige fraîche ou fondante, un comportement meilleur que celui d'un pneumatique du type routier (en anglais appelé « road type tyre ») conçu pour rouler sur des sols non enneigés.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « surface de roulement », on entend la surface formée par les points de la bande de roulement du pneumatique qui entrent en contact avec la chaussée lorsque le pneumatique roule.

Par « bloc », on entend des éléments en relief délimités par des découpures (« cut-out »), c'est-à-dire des rainures (« groove » en anglais), et/ou des incisions (« sipe » en anglais).

Par « coin » appartenant à la surface de contact d'un bloc, on entend un secteur délimité par deux côtés de la surface de contact du bloc. Ces deux côtés se coupent pour former un angle. Cet angle peut-être aigu, arrondi, biseauté ou autres.

(12) Par « rainure », on entend une découpure dont les faces de matière ne se touchent pas dans les conditions usuelles de roulage. Généralement, la largeur d'une rainure est supérieure ou égale à 2 mm.

(13) Par « incision », on entend une découpure dont les faces de matière se touchent dans les conditions usuelles de roulage. Généralement, la largeur d'une incision est inférieure à 2 mm.

(14) Par « module d'élasticité » d'un matériau élastique, on entend le rapport entre la variation de contrainte et la variation de déformation lorsque ce matériau est soumis à des efforts de traction ou de compression.

(15) Par « direction radiale », on entend une direction qui est perpendiculaire à l'axe de rotation du pneu (cette direction correspond à la direction de l'épaisseur de la bande de roulement).

(16) Par « direction axiale », on entend une direction parallèle à l'axe de rotation du pneu.

(17) Par « direction circonférentielle », on entend une direction qui est tangente à tout cercle centré sur l'axe de rotation. Cette direction est perpendiculaire à la fois à la direction axiale et à la direction radiale.

(18) Par « direction oblique », on entend une direction qui présente à la fois une composante axiale et une composante circonférentielle qui sont non nulles.

### RESUME DE L'INVENTION

(19) L'invention concerne une bande de roulement en matériau caoutchouteux pour pneumatique pour roulages hivernaux telle que définie dans la revendication 1.

(20) Le bloc de la bande de roulement va toucher le sol en premier au niveau du coin d'attaque. Les conditions dans lesquelles ce contact est réalisé déterminent l'intensité des bruits au roulage du pneumatique.

(21) L'invention propose de ne pas mettre de matériau de recouvrement au niveau du coin d'attaque de la face de contact. De cette manière, le bloc reste suffisamment élastique au niveau de ce coin pour limiter l'intensité des bruits liés au contact de ce coin avec le sol. En outre, comme les faces latérales du bloc sont recouvertes sur au moins 50% de leur surface par le matériau de recouvrement, on maintient la rigidité globale du bloc ce qui garantit une bonne adhérence du pneumatique sur un sol enneigé.

(22) Dans une variante de réalisation, l'incision s'étend sur la face de contact du bloc à partir du coin d'attaque.

(23) L'incision permet de donner encore plus de souplesse au coin d'attaque de la surface de contact. On diminue ainsi encore plus les bruits liés au contact du coin d'attaque avec le sol.

(24) Dans une variante de réalisation, l'incision à une profondeur variable dans le bloc, la profondeur de cette incision augmentant lorsque celle-ci s'éloigne du coin d'attaque.

(25) En donnant une profondeur variable à l'incision, on maintient une certaine rigidité du bloc à proximité du coin d'attaque. On évite ainsi une dégradation trop grande de ce bloc au niveau de ce coin sous l'effet des contacts répétés avec le sol.

Dans un mode de réalisation préférentiel, la couche de recouvrement comprend un matériau élastomère dont le module dynamique de cisaillement $G^*$ soumis à une contrainte maximale alternée de 0,7 MPa, à une fréquence de 10 Hz et à une température de -10°C est supérieur à 200 MPa et de préférence supérieur 300 MPa.

BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :

- la **figure 1** représente schématiquement une vue partielle d'une bande de roulement d'un pneumatique conforme à l'invention ;

- la **figure 2** représente une vue en perspective d'un bloc appartenant à la bande de roulement de la **figure 1**, selon un premier mode de réalisation de l'invention ;

- la **figure 3** représente une vue en perspective d'un bloc appartenant à la bande de roulement de la **figure 1**, selon un second mode de réalisation de l'invention;

- la **figure 4** représente est une vue en coupe du bloc de la **figure 3** dans la longueur d'une incision qui s'étend dans le bloc ;

- la **figure 5** représente une vue en perspective d'un bloc appartenant à la bande de roulement de la **figure 1**, selon un troisième mode de réalisation de l'invention.

Dans la description qui va suivre, des éléments sensiblement identiques ou similaires seront désignés par des références identiques.

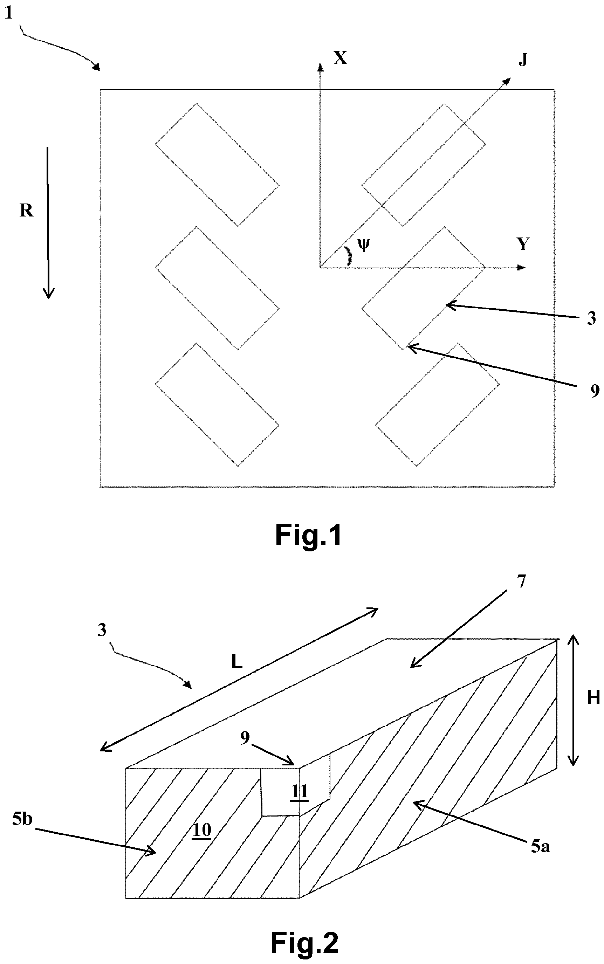

La **figure 1** représente schématiquement une vue partielle d'une bande de roulement 1 conforme à l'invention. Cette bande de roulement comprend une pluralité de blocs 3 en relief. Les blocs 3 sont ici globalement parallélépipédiques et s'étendent principalement selon une direction d'extension oblique J. Cette direction d'extension J fait un angle non nul par rapport à une direction circonférentielle X et par rapport à une direction axiale Y (angle ψ). Le bloc 3 comprend une zone d'attaque 9 qui est la partie du bloc qui va entrer en première en contact avec le sol lorsque le pneumatique roule selon la direction de roulement R (direction opposée ici à la direction X). Cette zone d'attaque 9 forme ici un coin d'attaque.

La **figure 2** est une vue en perspective d'un bloc 3 de la **figure 1** selon un premier mode de réalisation de l'invention. Ce bloc 3 présente une hauteur H et une longueur L. Plus particulièrement, le bloc 3 comprend des faces latérales 5a, 5b et une face de contact 7 reliant ces faces latérales 5a, 5b. Parmi ces faces latérales, on distingue des faces longitudinales 5a et des faces transversales 5b, qui sont, ici, perpendiculaires aux faces longitudinales 5a. Les faces longitudinales 5a s'étendent principalement dans la longueur du bloc 3, c'est-à-dire selon la direction oblique J.

Chaque face latérale 5a, 5b est recouverte par une couche 9 d'un matériau de recouvrement sur au moins 50% de la surface de la face. Le matériau de recouvrement présente des bonnes caractéristiques de rigidité, c'est-à-dire une bonne capacité à résister à une déformation élastique sous des efforts de compression et/ou de cisaillement.

Plus particulièrement, le matériau de recouvrement présente un module élastique supérieur au module élastique du matériau caoutchouteux composant le bloc 3. Un tel matériau de recouvrement est par exemple un matériau élastomère dont le module dynamique de cisaillement $G^*$ soumis à une contrainte maximale alternée de 0,7 MPa, à une fréquence de 10 Hz et à une température de -10°C est supérieur à 200 MPa et de préférence supérieur 300 MPa. Dans le présent document, les termes « module élastique G' » et « module visqueux G" » désignent des propriétés dynamiques bien connues de l'homme du métier. Ces propriétés sont mesurées sur un viscoanalyseur de type Metravib VA4000 sur des éprouvettes moulées à partir de compositions crues. Des éprouvettes telles que celles décrites dans la norme ASTM D 5992 - 96 (version publiée en Septembre 2006, initialement approuvée en 1996) à la figure X2.1 (mode de réalisation circulaire) sont utilisées. Le diamètre de l'éprouvette est de 10 mm (elle a donc une section circulaire de 78.5 mm²), l'épaisseur de chacune des portions de composition caoutchouteuse est de 2 mm, ce qui donne un ratio « diamètre sur épaisseur » de 5 (contrairement à la norme ISO 2856, mentionnée dans la norme ASTM, paragraphe X2.4, qui préconise une valeur d/L de 2). On enregistre la réponse d'un échantillon de composition caoutchouteuse vulcanisée soumis à une sollicitation sinusoïdale en cisaillement simple alterné, à la fréquence de 10 Hz. L'éprouvette est sollicitée en cisaillement sinusoïdal à 10 Hz, à contrainte imposée (0.7 MPa), symétriquement autour de sa position d'équilibre. La mesure est réalisée au cours d'une rampe de température croissante de 1,5°C par minute, depuis une température Tmin inférieure à la température de transition vitreuse (Tg) du matériau, jusqu'à une température Tmax qui peut correspondre au plateau caoutchoutique du matériau. Avant de commencer le balayage, on stabilise l'échantillon à la température Tmin pendant 20 min pour avoir une température homogène au sein de l'échantillon. Le résultat exploité est le module élastique de cisaillement dynamique (G') et le module visqueux de cisaillement (G") aux températures choisies (en l'occurrence, 0°, 5° et 20°C). Le « module complexe » G* se définit comme la valeur absolue de la somme complexe des modules élastique G' et visqueux G" :

$$G^* = \sqrt{\left(G'^2 + G''^2\right)}.$$

Dans une variante de réalisation, le matériau élastomère de la couche de recouvrement comprend une composition à base d'au moins un élastomère diénique très fortement chargé en souffre, tel que de l'ébonite.

Dans une autre variante de réalisation, la couche de recouvrement comprend un assemblage de fibres, par exemple un assemblage tridimensionnel de fibres formant un feutre. Les fibres de ce feutre peuvent être choisies dans le groupe des fibres textiles, des fibres minérales et de leur mélange. On notera également que les fibres de ce feutre peuvent être choisies parmi des fibres textiles d'origine naturelle, par exemple, dans le groupe des fibres de soie, de coton, de bambou, de cellulose, de laine et de leurs mélanges.

Dans une autre variante de réalisation, le matériau élastomère de la couche de recouvrement comprend une composition à base d'au moins un polymère thermoplastique, tel que du polyéthylène téréphtalate (PET). Un tel polymère peut présenter un module de Young supérieur à 1 GPa.

On notera également que le bloc 3 comprend une partie 11 non recouverte par le matériau de recouvrement. Cette partie 11 s'étend sur les faces latérales 5a, 5b du bloc encadrant le coin d'attaque 9.

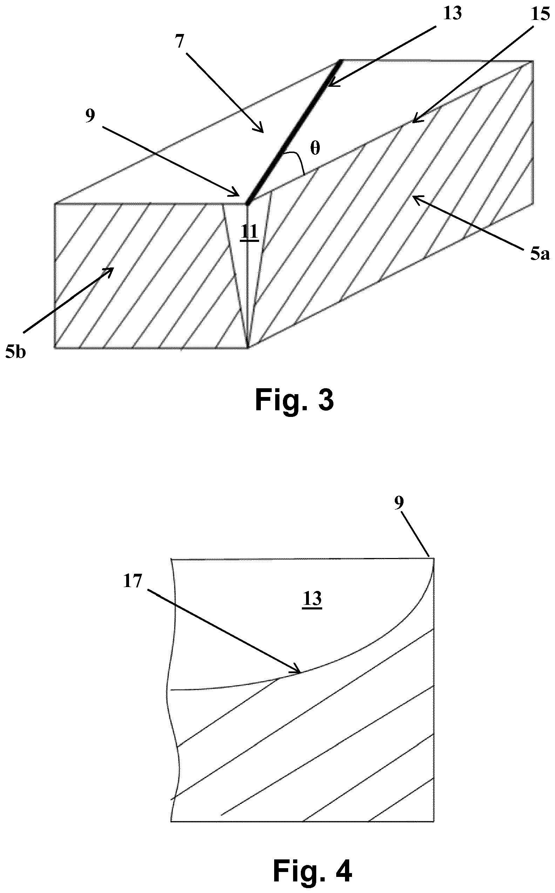

La **figure 3** présente une variante de réalisation dans laquelle la partie non recouverte 11 du bloc est formée par deux triangles. Ces triangles s'étendent respectivement sur les faces latérales 5a, 5b du bloc encadrant le coin d'attaque 9.

Dans le mode de réalisation de la **figure 3**, le bloc 3 comprend également une incision 13 s'étend sur la face de contact 7 du bloc à partir du coin d'attaque 9. Cette incision forme un angle θ avec une arête longitudinale 15. Cette arête 15 étant formée par la rencontre de la face de contact 7 avec une face longitudinale 5a du bloc. L'angle θ est, ici, compris entre 30° et 60°.

En variante, la profondeur de cette incision 13 est variable dans le bloc. Par exemple, cette profondeur augmente plus on s'éloigne du coin d'attaque 9. La **figure 4** illustre une telle variante. Plus particulièrement, la **figure 4** illustre une variante dans laquelle la profondeur de l'incision suit une évolution régulière selon une courbure 17.

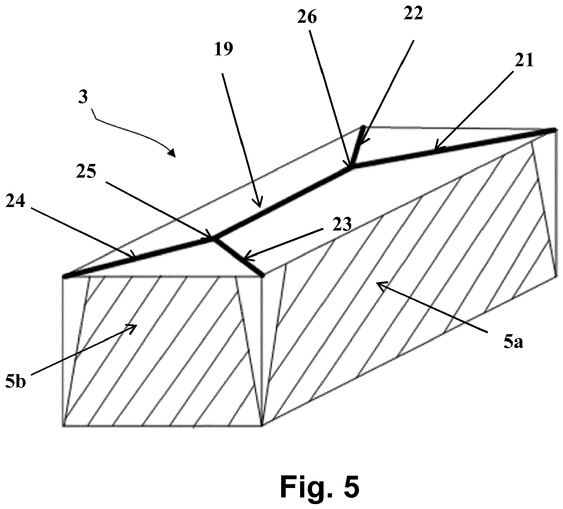

La **figure 5** représente un troisième mode de réalisation dans lequel le bloc 3 comprend une incision principale 19 et quatre incisions secondaires 21, 22, 23, 24 s'étendant respectivement à partir des quatre coins du bloc 3. L'incision principale 19 s'étend partiellement dans la longueur du bloc 3 sur au moins 60% de la longueur de ce bloc 3, cette incision principale comportant alors deux extrémités 25, 26. Chaque extrémité 25, 26 de l'incision principale est reliée à deux incisions secondaires 21, 22, 23, 24. On notera ici que, dans l'exemple de la **figure 5**, chaque face latérale 5a, 5b du bloc 3 comporte une ou plusieurs parties non recouvertes par le matériau de recouvrement.

L'invention n'est pas limitée aux exemples décrits et représentés et diverses modifications peuvent y être apportées sans sortir du cadre des revendications.

## Revendications

1. Bande de roulement en matériau caoutchouteux pour pneumatique pour roulages hivernaux, cette bande de roulement comprenant une pluralité de blocs (3) de hauteur H, chaque bloc comportant une face de contact (7) destinée à entrer en contact avec un sol au cours d'un roulage du pneumatique et au moins une face latérale (5a, 5b), cette face latérale étant recouverte par une couche (10) d'un matériau de recouvrement sur au moins 50% de sa surface, le bloc comportant une zone d'attaque destinée à entrer en contact en première avec le sol au cours du roulage du pneumatique **caractérisée en ce que** le bloc (3) a une direction d'extension (J) oblique de sorte que la zone d'attaque de ce bloc est un coin d'attaque (9) et **en ce que** le bloc (3) comporte une partie non recouverte (11) par le matériau de recouvrement, le matériau de recouvrement ayant un module élastique supérieur au module élastique du matériau caoutchouteux composant le bloc, ladite partie non recouverte (11) s'étendant sur les faces latérales (5a,5b) du bloc (3) encadrant le coin d'attaque (9) et s'étendant du coin d'attaque sur au moins 1/3 de la hauteur H du bloc.

2. Bande de roulement selon la revendication 1, **caractérisée en ce que** la partie non recouverte (11) du bloc (3) est formée par deux triangles.

**3.** Bande de roulement selon l'une quelconque des revendications 1 ou 2, **caractérisée en ce que** la bande de roulement comprend une incision (13) s'étendant sur la face de contact (7) du bloc à partir du coin d'attaque (9).

**4.** Bande de roulement selon l'une quelconque des revendications 1 à 3, **caractérisée en ce que** l'incision a une profondeur variable dans le bloc, la profondeur de cette incision augmentant plus celle-ci s'éloigne du coin d'attaque (9).

**5.** Bande de roulement selon l'une quelconque des revendications 1 à 4, **caractérisée en ce que** la couche de recouvrement (10) comprend un matériau élastomère dont le module dynamique de cisaillement G* soumis à une contrainte maximale alternée de 0,7 MPa, à une fréquence de 10 Hz et à une température de -10°C est supérieur à 200 MPa et de préférence supérieur 300 MPa.

**Patentansprüche**

**1.** Lauffläche aus gummiartigem Material für Winterreifen, wobei diese Lauffläche eine Vielzahl von Blöcken (3) der Höhe H umfasst, wobei jeder Block eine Kontaktfläche (7) aufweist, die bestimmt ist, mit einem Boden während eines Fahrens des Reifens in Kontakt zu treten und mindestens eine Seitenfläche (5a, 5b), wobei diese Seitenfläche von einer Schicht (10) eines Beschichtungsmaterials auf mindestens 50 % ihrer Oberfläche bedeckt ist, wobei der Block eine Angriffszone aufweist, die bestimmt ist, als erstes mit dem Boden während des Fahrens des Reifens in Kontakt zu treten, **dadurch gekennzeichnet, dass** der Block (3) eine schräge Ausdehnungsrichtung (J) derart hat, dass die Angriffszone dieses Blocks eine Angriffsecke (9) ist und dass der Block (3) einen nicht von dem Beschichtungsmaterial bedeckten Teil (11) aufweist, wobei das Beschichtungsmaterial ein elastisches Modul hat, das höher ist als das elastische Modul des gummiartigen Materials, welches den Block bildet, wobei sich dieser nicht bedeckte Teil (11) auf den Seitenflächen (5a, 5b) des Blocks (3) erstreckt, welche die Angriffsecke (9) umgeben, und sich von der Angriffsecke über mindestens 1/3 der Höhe H des Blocks erstreckt.

**2.** Lauffläche nach Anspruch 1, **dadurch gekennzeichnet, dass** der nicht bedeckte Teil (11) des Blocks (3) von zwei Dreiecken gebildet ist.

**3.** Lauffläche nach einem der Ansprüche 1 oder 2, **dadurch gekennzeichnet, dass** die Lauffläche einen Einschnitt (13) umfasst, der sich auf der Kontaktfläche (7) des Blocks ab der Angriffsecke (9) erstreckt.

**4.** Lauffläche nach einem der Ansprüche 1 bis 3, **dadurch gekennzeichnet, dass** der Einschnitt eine variable Tiefe in dem Block hat, wobei die Tiefe dieses Einschnitts mit zunehmender Entfernung von der Angriffsecke (9) zunimmt.

**5.** Lauffläche nach einem der Ansprüche 1 bis 4, **dadurch gekennzeichnet, dass** die Beschichtungsschicht (10) ein Elastomermaterial umfasst, dessen dynamisches Schermodul G* bei einer alternierenden maximalen Beanspruchung von 0,7 MPa bei einer Frequenz von 10 Hz und einer Temperatur von -10 °C größer als 200 MPa und vorzugsweise größer als 300 MPa ist.

**Claims**

**1.** A tread made of rubber material for tyre for winter rolling, this tread comprising a plurality of blocks (3) of height H, each block including a contact face (7) intended to come into contact with a ground during a rolling of the tyre and at least one lateral face (5a, 5b), this lateral face being covered with a layer (10) of a cover material over at least 50% of its surface, the block including an attack area intended to come into contact first with the ground during the rolling of the tyre, **characterized in that** the block (3) has an oblique direction of extension (J) so that the attack area of this block is an attack wedge (9) and **in that** the block (3) includes a non-covered part (11) by the cover material, the cover material having an elastic module greater than the elastic module of the rubber material composing the block, said non-covered part (11) extending on the lateral faces (5a, 5b) of the block (3) framing the attack wedge (9) and extending from the attack wedge over at least 1/3 of the height H of the block.

**2.** The tread according to claim 1, **characterized in that** the non-covered part (11) of the block (3) is formed by two triangles.

**3.** The tread according to any one of claims 1 or 2, **characterized in that** the tread comprises an incision (13) extending over the contact face (7) of the block from the attack wedge (9).

**4.** The tread according to any one of claims 1 to 3, **characterized in that** the incision has a variable depth in the block, the depth of this incision increasing as it moves away from the attack wedge (9).

**5.** The tread according to any one of claims 1 to 4, **characterized in that** the cover layer (10) comprises an elastomeric material whose dynamic shear modulus G* subjected to an alternating maximum stress of 0.7 MPa, at a frequency of 10 Hz and at a temperature of -10 °C is greater than 200 MPa and preferably greater than 300 MPa.

**Fig.1**

**Fig.2**

**Fig. 3**

**Fig. 4**

Fig. 5

## RÉFÉRENCES CITÉES DANS LA DESCRIPTION

**Documents brevets cités dans la description**

- WO 0143958 A
- JP 2246808 A
- DE 2606703
- JP 2007216829 B
- JP 60094805 B
- JP 2004314783 A